# EUROPÄISCHE PATENTANMELDUNG

(11) **EP 1 482 453 A2**
(43) Veröffentlichungstag der Anmeldung: **01.12.2004**
(21) Anmeldenummer: 04012437.2
(22) Anmeldetag: 26.05.2004
(51) Int. Cl.: G07B 17/00

(54) **Verfahren zum Laden von Daten in eine Speichereinrichtung**

(30) Priorität: 28.05.2003 DE 10324507
(71) Anmelder: Francotyp-Postalia AG & Co. KG, 16547 Birkenwerder (DE)
(72) Erfinder: Heinrich, Clemens, 12161 Berlin (DE)
(74) Vertreter: COHAUSZ & FLORACK

(57) **Zusammenfassung**

Verfahren zum Laden von Daten in eine mit einer ersten Verarbeitungseinheit (1.1) verbundene erste Speichereinrichtung (1.3) einer Datenverarbeitungseinrichtung (1), bei dem die erste Verarbeitungseinheit (1.1) unter Zugriff auf ein in der ersten Speichereinrichtung (1.3) gespeichertes Ladeprogramm in einem Ladeschritt erste Daten in die erste Speichereinrichtung (1.3) lädt, wobei zur Erzielung einer vollständigen Speicherüberdeckung in dem Ladeschritt der verfügbare Speicherplatz der ersten Speichereinrichtung (1.3) vollständig belegt wird.

## Beschreibung

Die vorliegende Erfindung betrifft ein Verfahren zum Laden von Daten in eine mit einer ersten Verarbeitungseinheit verbundene erste Speichereinrichtung einer Datenverarbeitungseinrichtung, bei dem die erste Verarbeitungseinheit unter Zugriff auf ein in der ersten Speichereinrichtung gespeichertes Ladeprogramm in einem Ladeschritt erste Daten in die erste Speichereinrichtung lädt. Sie betrifft weiterhin eine entsprechende, zur Durchführung des Verfahrens geeignete Datenverarbeitungseinrichtung sowie eine entsprechende, zur Durchführung des Verfahrens geeignete Ladeeinrichtung.

Bei einer Vielzahl von Anwendungen von Datenverarbeitungseinrichtungen ist es wünschenswert oder sogar erforderlich, dass die Datenverarbeitungseinrichtung ausschließlich mit autorisierten Anwendungsprogrammen betrieben wird. Hierdurch wird erreicht, dass die Datenverarbeitungseinrichtung ausschließlich die für ihren bestimmungsgemäßen Einsatz erforderlichen Funktionen zur Verfügung stellt. Insbesondere bei Datenverarbeitungseinrichtungen, mit denen sicherheitsrelevante Vorgänge durchgeführt werden, wird hierdurch eventuellen Manipulations- oder Missbrauchsversuchen entgegengewirkt. Ein Beispiel für derartige Datenverarbeitungseinrichtungen sind die Sicherheitsmodule von Frankiermaschinen, mit denen abrechnungsrelevante Operationen durchgeführt werden.

Um die Verwendung autorisierter Anwendungsprogramme bei solchen Datenverarbeitungseinrichtungen sicherzustellen, ist es bekannt, kryptographische Mittel einzusetzen, welche die Authentizität des geladenen Programms überprüfbar machen. So ist aus der EP 0 847 031 A1 unter anderem bekannt, eine digitale Signatur über dem zu ladenden Programm zu erzeugen, die dann in der Datenverarbeitungseinrichtung anhand eines entsprechenden Verifikationsschlüssels überprüft wird.

Hierdurch wird zwar sichergestellt, dass bei einem solchen Ladevorgang unter Verwendung des Ladeprogramms nur autorisierte Daten geladen werden. Es besteht jedoch das Problem, dass auf andere Weise, insbesondere unter Umgehung des Ladeprogramms, in die Speichereinrichtung gelangte, nicht autorisierte Daten nicht erkannt werden. Handelt es sich bei diesen Daten um ein nicht autorisiertes Anwendungsprogramm oder Daten, die zu einer nicht autorisierten Funktion eines autorisierten Anwendungsprogramms führen, besteht die Gefahr, dass die Datenverarbeitungseinrichtung nicht autorisierte Funktionen durchführen kann, ohne dass dies erkannt wird.

Ein weiterer Nachteil der geschilderten Vorgehensweise liegt darin, dass sie relativ aufwändig ist, da sie die Einbringung eines Verifikationsschlüssels und eines entsprechenden Verifikationsalgorithmus in jede Datenverarbeitungseinrichtung erfordert.

Der vorliegenden Erfindung liegt daher die Aufgabe zu Grunde, ein Verfahren bzw. eine Datenverarbeitungseinrichtung der eingangs genannten Art zur Verfügung zu stellen, welches bzw. welche die oben genannten Nachteile nicht oder zumindest in geringerem Maße aufweist und insbesondere auf einfache Weise gewährleistet, dass ausschließlich autorisierte Daten in der Speichereinrichtung vorhanden sind.

Die vorliegende Erfindung löst diese Aufgabe ausgehend von einem Verfahren gemäß dem Oberbegriff des Anspruchs 1 durch die im kennzeichnenden Teil des Anspruchs 1 angegebenen Merkmale. Sie löst diese Aufgabe ebenfalls ausgehend von einer Datenverarbeitungseinrichtung gemäß dem Oberbegriff des Anspruchs 14 durch die im kennzeichnenden Teil des Anspruchs 14 angegebenen Merkmale. Sie löst diese Aufgabe weiterhin ausgehend von einer Datenverarbeitungseinrichtung gemäß dem Oberbegriff des Anspruchs 21 durch die im kennzeichnenden Teil des Anspruchs 21 angegebenen Merkmale. Sie löst diese Aufgabe schließlich ausgehend von einer Ladeeinrichtung gemäß dem Oberbegriff des Anspruchs 24 durch die im kennzeichnenden Teil des Anspruchs 24 angegebenen Merkmale.

Der vorliegenden Erfindung liegt die technische Lehre zu Grunde, dass man auf einfache Weise gewährleisten kann, dass ausschließlich autorisierte Daten in der ersten Speichereinrichtung vorhanden sind, wenn zur Erzielung einer vollständigen Speicherüberdeckung in dem Ladeschritt der verfügbare Speicherplatz der ersten Speichereinrichtung vollständig belegt wird. Die vollständige Belegung des verfügbaren ersten Speicherplatzes gewährleistet dabei in einfacher Weise, dass kein Speicherplatz für weitere, nicht autorisierte Daten zur Verfügung steht und eventuell bereits vorhandene, nicht autorisierte Daten beim Laden überschrieben werden.

Im einfachsten Fall können die ersten Daten und der verfügbare Speicherplatz der ersten Speichereinrichtung so aufeinander abgestimmt werden, dass die ersten Daten exakt den neben dem Speicherplatz für das Ladeprogramm vorhandenen, verfügbaren Speicherplatz der Speichereinrichtung ausfüllen, wenn sie in die Speichereinrichtung geladen werden. Vorzugsweise werden jedoch in dem Ladeschritt nicht durch das Ladeprogramm oder die ersten Daten belegte Speicherbereiche der ersten Speichereinrichtung durch Fülldaten aufgefüllt. Hierdurch erübrigt sich in einfacher Weise die exakte Abstimmung zwischen den ersten Daten und der ersten Speichereinrichtung, sodass bezüglich der Dimensionierung der ersten Daten bzw. der ersten Speichereinrichtung eine größere Gestaltungsfreiheit besteht.

Bei den Fülldaten kann es sich um in beliebiger Weise vorgegebene Daten handeln, die den neben dem Ladeprogramm und den ersten Daten noch verfügbaren Speicherplatz vollständig ausfüllen. Vorzugsweise handelt es sich bei den Fülldaten um eine oder mehrere Zufallszahlen. Hiermit wird vermieden, dass durch Ausnutzung immer wiederkehrender Datenmuster beim Auffüllen unerkannte Manipulationen an dem Auffüllbereich vorgenommen werden können. So kann beispielsweise vermieden werden, dass in einem solchen regelmäßigen Datenmuster unerkannt ein nicht autorisiertes ablauffähiges Programm versteckt wird.

Die Fülldaten können durch einen entsprechenden, beispielsweise im Ladeprogramm integrierten, Algorithmus erzeugt werden. Sie können während oder nach dem Einschreiben der ersten Daten in die erste Speichereinrichtung an den entsprechenden freibleibenden Bereichen der ersten Speichereinrichtung platziert werden. Vorzugsweise werden die Fülldaten durch eine mit der ersten Verarbeitungseinheit verbundene Ladeeinrichtung vorgegeben. Hierdurch kann verhindert werden, dass die Generierung der Fülldaten durch ein bereits in der ersten Speichereinrichtung vorhandenes, nicht autorisiertes Programm manipuliert wird, um das Überschreiben dieses nicht autorisierten Programms zu verhindern.

Eine solche Ladeeinrichtung ist in der Regel über eine geeignete erste Schnittstelle mit der ersten Verarbeitungseinheit verbunden. Über die Ladeeinrichtung werden in der Regel auch die ersten Daten zur Verfügung gestellt.

Bei bevorzugten Varianten des erfindungsgemäßen Verfahrens ist vorgesehen, dass der verfügbare Speicherplatz der ersten Speichereinrichtung in wenigstens einem Überprüfungsschritt in wenigstens zwei Speichersegmente unterteilt wird und über den Inhalt eines jeden der Speichersegmente eine Prüfsumme gebildet wird, die mit einer zugeordneten Vergleichsprüfsumme verglichen wird. Durch diesen Überprüfungsschritt kann sichergestellt werden, dass während des Ladens der ersten Daten keine unerkannten Manipulationen an den Daten vorgenommen wurden.

Bei besonders vorteilhaften Varianten erfolgt dabei eine Unterteilung in teilweise überlappende Speichersegmente. Hierdurch werden in einfacher und effektiver Weise Lücken zwischen den Speichersegmenten vermieden, in denen nicht autorisierte Daten Platz finden könnten.

Weist mindestens eine der Prüfsummen nicht ein bestimmtes vorgegebenes Verhältnis zu der zugeordneten Vergleichsprüfsumme auf, stimmt also beispielsweise eine der Prüfsummen nicht mit ihrer zugeordneten Vergleichsprüfsumme überein, so kann dies in geeigneter Weise signalisiert werden. Der Benutzer erkennt dann sofort, dass das Laden der ersten Daten nicht ordnungsgemäß erfolgt ist, und kann hieraus entsprechende Konsequenzen ziehen. Ebenfalls können in einem solchen Fall die erste Verarbeitungseinheit oder andere Teile der Datenverarbeitungseinrichtung für einen weiteren Betrieb gesperrt werden.

Es wird an dieser Stelle darauf hingewiesen, dass der Begriff Speichereinrichtung im Sinne der vorliegenden Anmeldung nicht nur ein einzelnes Speichermodul mit einem einzigen zusammenhängenden Speicher bezeichnen soll. Vielmehr kann eine solche Speichereinrichtung auch mehrere separate Speichermodule umfassen, die gegebenenfalls auch auf unterschiedlichen Speichertechniken basieren können.

Weist die erste Speichereinrichtung mehrere, nicht zusammenhängende Speicherbereiche auf, so ist bevorzugt vorgesehen, dass der jeweilige Speicherbereich in dem Überprüfungsschritt in wenigstens zwei Teilspeichersegmente unterteilt wird. Anschließend wird analog zu den obigen Ausführungen für jedes Teilspeichersegment eine entsprechende Prüfsumme erzeugt und mit einer zugeordneten Vergleichsprüfsumme verglichen.

Die Unterteilung des verfügbaren Speicherplatzes in Speichersegmente kann nach einem beliebigen vorgegebenen Schema erfolgen. Vorzugsweise wird die Unterteilung in Speichersegmente für jeden Überprüfungsschritt nach einem variablen Algorithmus bestimmt. Hierdurch werden Manipulationen an den Prüfsummen erschwert. Bevorzugt wird die Unterteilung in Speichersegmente nach dem Zufallsprinzip bestimmt, da hierdurch eine besonders hohe Manipulationssicherheit erzielt werden kann. Hierbei können sowohl die Größe als auch die Position des jeweiligen Speichersegments nach dem Zufallsprinzip bestimmt werden. Es können dabei beliebige geeignete Zufalls- bzw. Pseudozufallsalgorithmen eingesetzt werden.

Die Bildung der Prüfsummen kann in beliebiger bekannter Weise unter Verwendung entsprechender Algorithmen erfolgen. Vorteilhafte Varianten des erfindungsgemäßen Verfahrens zeichnen sich dadurch aus, dass bei der Bildung der Prüfsumme kryptographische Mittel verwendet werden. Hierbei können beliebige bekannte kryptographische Prüfsummenalgorithmen, wie beispielsweise SHA-1, MD4, MD5 etc., Anwendung finden. Diese Prüfsummenalgorithmen sind nicht notwendigerweise an Schlüssel gebunden. Es versteht sich jedoch, dass bei der Generierung der Prüfsummen auch schlüsselgebundene Algorithmen, insbesondere beliebige bekannte Verschlüsselungsalgorithmen, Anwendung finden können.

Der Überprüfungsschritt kann ausschließlich in der Datenverarbeitungseinrichtung erfolgen, deren erste Verarbeitungseinheit hierbei auf entsprechende Komponenten des Ladeprogramms zugreifen kann. Vorzugsweise wird jedoch zumindest die jeweilige Vergleichsprüfsumme in einer mit der ersten Verarbeitungseinheit verbundenen Ladeeinrichtung gebildet. Hierdurch wird die Manipulation der Überprüfung durch bereits in der Datenverarbeitungseinrichtung vorhandene, nicht autorisierte Programme erschwert.

Die Ladeeinrichtung verwendet bei der Generierung der Vergleichsprüfsumme dann dieselbe Unterteilung in Speichersegmente sowie dieselben Fülldaten. Vorzugsweise werden die Unterteilung und die Fülldaten ohnehin von der Ladeeinrichtung vorgegeben, sodass keine Übertragung dieser Informationen an die Ladeeinrichtung erforderlich ist, wodurch Manipulationen weiter erschwert werden.

Vorzugsweise erfolgt auch der Vergleich der Prüfsumme mit der zugeordneten Vergleichsprüfsumme in der mit der Verarbeitungseinheit verbundenen Ladeeinrichtung. Hierdurch wird die Sicherheit noch weiter erhöht, da keine interne Manipulation des Vergleichs durch ein in der Datenverarbeitungseinrichtung vorhandenes, nicht autorisiertes Programm erfolgen kann. Die jeweilige Prüfsumme wird dabei an die Ladeeinrichtung übermittelt, welche die Prüfsumme mit der zugehörigen Vergleichsprüfsumme vergleicht. Stellt die Ladeeinrichtung das Fehlen einer vorgegebenen Beziehung zwischen der Prüfsumme und der zugehörigen Vergleichsprüfsumme fest, beispielsweise eine fehlende Übereinstimmung, wird dies in geeigneter Weise signalisiert. Zusätzlich oder alternativ können wie oben beschrieben Maßnahmen ergriffen werden, um den weiteren Betrieb der Datenverarbeitungseinrichtung zu unterbinden.

Bei bevorzugten Varianten des erfindungsgemäßen Verfahrens werden die ersten Daten in einem ersten Teilschritt des Ladeschrittes in einer im wesentlichen nicht komprimierbaren Form zur Verfügung gestellt und vorzugsweise in dieser Form in die erste Speichereinrichtung geladen. In einem nachfolgenden zweiten Teilschritt des Ladeschrittes werden sie dann in eine komprimierbare Form umgewandelt und endgültig in die erste Speichereinrichtung geladen. Das Laden der ersten Daten in einer im wesentlichen nicht komprimierbaren Form hat den Vorteil, dass folgendes Manipulationsszenario verhindert werden kann: ein bereits in der ersten Speichereinrichtung vorhandenes, nicht autorisiertes Programm mit einer Komprimierungsfunktion könnte die ersten Daten beim Laden in die Speichereinrichtung komprimieren, sodass diese weniger Speicherplatz benötigen. Das nicht autorisierte Programm könnte so sein Überschreiben verhindern. Auch bei Varianten mit der oben beschriebenen segmentweisen Überprüfung in dem Überprüfungsschritt könnte dies möglicherweise unerkannt bleiben, da das nicht autorisierte Programm bei der Überprüfung die jeweilige Datensequenz für das betreffende Speichersegment aus den komprimierten ersten Daten rekonstruieren könnte und so eine korrekte Belegung der ersten Speichereinrichtung vorspiegeln könnte.

Um die ersten Daten reversibel in eine solche nicht oder nicht wesentlich komprimierbare Form zu bringen, können beliebige geeignete Algorithmen eingesetzt werden. Bei Daten in im wesentlichen nicht bzw. kaum komprimierbarer Form handelt es sich in der Regel um Daten, deren Erscheinungsform einer zufälligen Datenfolge gleicht oder dieser zumindest angenähert ist. Eine solche zufällig erscheinende Datenfolge ohne erkennbare Ordnung kann in der Regel nicht oder nur in sehr geringem Umfang komprimiert werden. Aus diesem Grund werden auch für die Fülldaten wie oben erwähnt bevorzugt Zufallszahlen eingesetzt. Hierdurch wird verhindert, dass eine solcher Kompressionsangriff auf die Fülldaten angewandt wird.

Es gelingt dem oben genannten nicht autorisierten Programm in einem solchen Fall in der Regel nicht, die ersten Daten bzw. die Fülldaten so weit zu komprimieren, dass sie neben dem nicht autorisierten Programm noch vollständig Platz in der Speichereinrichtung finden. Vielmehr wird entweder ein Teil des nicht autorisierten Programms überschrieben oder - falls das nicht autorisierte Programm ein Überschreiben verhindert - es gehen zumindest Teile der ersten Daten bzw. Fülldaten verloren, was spätestens in dem Überprüfungsschritt erkannt wird.

Bei besonders vorteilhaften Varianten des erfindungsgemäßen Verfahrens werden die ersten Daten in einem ersten Teilschritt des Ladeschrittes in verschlüsselter Form zur Verfügung gestellt und vorzugsweise in die erste Speichereinrichtung eingeschrieben. In einem nachfolgenden zweiten Teilschritt des Ladeschrittes werden die ersten Daten dann entschlüsselt und endgültig in die erste Speichereinrichtung geladen. Die Verschlüsselung bringt dabei zum einen den Vorteil mit sich, dass die ersten Daten bei der Übertragung zur Datenverarbeitungseinrichtung vor unbefugten Zugriff geschützt sind. Zum anderen weisen solche verschlüsselte Daten in der Regel eine Erscheinungsform auf, die je nach Qualität des Verschlüsselungsalgorithmus stark einer zufälligen Datenfolge ähnelt. Hierdurch handelt es sich bei derart verschlüsselten ersten Daten auch um nicht oder nicht wesentlich komprimierbare Daten im Sinne der obigen Ausführungen.

Der Entschlüsselungsschlüssel zum Entschlüsseln der ersten Daten kann dabei bereits vor Empfang der ersten Daten in der Datenverarbeitungseinrichtung in der ersten Speichereinrichtung vorhanden sein. Beispielsweise kann er zusammen mit dem Entschlüsselungsalgorithmus im Programmcode des Ladeprogramms integriert sein. Vorzugsweise wird ein entsprechender Entschlüsselungsschlüssel zur Verwendung bei der Entschlüsselung der ersten Daten vor dem zweiten Teilschritt gesondert an die erste Verarbeitungseinheit übermittelt. Dies kann insbesondere durch eine mit der ersten Verarbeitungseinheit verbundene Ladeeinrichtung geschehen.

Hierdurch kann verhindert werden, dass ein Entschlüsselungsschlüssel, der möglicherweise längere Zeit in der Datenverarbeitungseinrichtung vorhanden ist, bevor die ersten Daten zur Verfügung gestellt werden, in irgend einer Weise kompromittiert wird und dann durch ein nicht autorisiertes Programm verwendet wird, um den oben beschriebenen Sicherungsmechanismus durch nicht oder kaum komprimierbare Daten zu umgehen.

Bevorzugt wird der Entschlüsselungsschlüssel erst mit oder nach dem Einschreiben der verschlüsselten ersten Daten in die erste Speichereinrichtung übermittelt, um zu verhindern, dass das nicht autorisierte Programm den Entschlüsselungsschlüssel in der beschriebenen Weise nutzen kann, um den Sicherungsmechanismus durch die verschlüsselten und demnach nicht oder kaum komprimierbaren Daten zu umgehen.

Bei dem Entschlüsselungsschlüssel handelt es sich in der Regel um einen geheimen Schlüssel, der nur in der die ersten Daten verschlüsselnden Einrichtung und nach der Übertragung auch in der Datenverarbeitungseinrichtung bekannt ist. Für die Verschlüsselung der ersten Daten können beliebige bekannte Verschlüsselungsalgorithmen eingesetzt werden. Hierbei kommen sowohl symmetrische Verschlüsselungsalgorithmen wie DES, TripleDES, RC4 (ARC4), Rijndael etc. Es können aber auch asymmetrische Verschlüsselungsalgorithmen wie RSA etc. angewandt werden. In diesem Fall verschlüsselt die verschlüsselnde Einrichtung dann entweder mit ihrem privaten Schlüssel und es wird der zugehörige öffentliche Schlüssel als der Entschlüsselungsschlüssel übermittelt. Alternativ kann die verschlüsselnde Einrichtung mit einem der Datenverarbeitungseinrichtung zugeordneten öffentlichen Schlüssel verschlüsseln, wobei dann - in untypischer Weise - der zugeordnete private Schlüssel der Datenverarbeitungseinrichtung als Entschlüsselungsschlüssel übermittelt wird.

Die Übermittlung des Entschlüsselungsschlüssels kann wiederum durch geeignete kryptographische Mittel abgesichert werden, um die Geheimhaltung des Entschlüsselungsschlüssels sicherzustellen.

Bei bevorzugten Varianten des erfindungsgemäßen Verfahrens werden die ersten Daten in einem Authentifizierungsschritt unter Verwendung der Verarbeitungseinheit auf ihre Authentizität überprüft. Hierdurch kann sichergestellt werden, dass die ersten Daten nicht infolge einer Manipulation, beispielsweise bei der Übermittlung zur Datenverarbeitungseinrichtung, nicht autorisierte Daten, insbesondere nicht autorisierte Programme, enthalten.

Um die Authentizität der ersten Daten sicherzustellen bzw. zu überprüfen, können beliebige bekannte Authentifizierungsverfahren eingesetzt werden. Vorzugsweise werden zur Sicherstellung der Authentizität der ersten Daten kryptographische Mittel eingesetzt. So können beispielsweise so genannte Message Authentication Codes (MAC) ebenso Verwendung finden wie digitale Signaturen oder dergleichen.

Bei den ersten Daten kann es sich grundsätzlich um beliebige Daten handeln. Bei vorteilhaften Ausgestaltungen des erfindungsgemäßen Verfahrens umfassen die ersten Daten ein ausführbares Programm. Dies ist besonders bei Konstellationen von Vorteil, bei denen sichergestellt werden soll, dass die Datenverarbeitungseinrichtung ausschließlich mit autorisierten Programmen betrieben werden soll.

Die vorliegende Erfindung betrifft weiterhin eine Datenverarbeitungseinrichtung, insbesondere eine Mikroprozessorkarte, mit einer ersten Verarbeitungseinheit, einer mit der ersten Verarbeitungseinheit verbundenen ersten Speichereinrichtung und einer mit der ersten Verarbeitungseinheit verbundenen ersten Schnittstelleneinrichtung. Die erste Verarbeitungseinheit ist zum Laden von über die erste Schnittstelleneinrichtung zur Verfügung gestellten ersten Daten in die erste Speichereinrichtung unter Zugriff auf ein in der ersten Speichereinrichtung gespeichertes Ladeprogrämm ausgebildet. Erfindungsgemäß ist vorgesehen, dass zur Erzielung einer vollständigen Speicherüberdeckung der ersten Speichereinrichtung die erste Verarbeitungseinheit und/oder das Ladeprogramm zum vollständigen Belegen des verfügbaren Speicherplatzes der ersten Speichereinrichtung während oder nach dem Laden der ersten Daten in die erste Speichereinrichtung ausgebildet sind.

Mit dieser Datenverarbeitungseinrichtung lassen sich die oben beschriebenen Ausgestaltungen und Vorteile des erfindungsgemäßen Verfahrens in gleichem Maße realisieren. Zur Vermeidung von Wiederholungen wird daher auf die obigen Ausführungen verwiesen.

Bevorzugt ist die erste Verarbeitungseinheit und zusätzlich oder alternativ das Ladeprogramm zum oben beschriebenen Auffüllen von nicht durch das Ladeprogramm oder die ersten Daten belegten Speicherbereichen der ersten Speichereinrichtung durch Fülldaten ausgebildet.

Bei vorteilhaften Weiterbildungen der erfindungsgemäßen Datenverarbeitungseinrichtung ist die erste Verarbeitungseinheit und zusätzlich oder alternativ das Ladeprogramm zur Durchführung eines oben beschriebenen Überprüfungsschrittes zur Überprüfung der Integrität der in der ersten Speichereinrichtung gespeicherten Daten ausgebildet.

Vorteilhafterweise ist die erste Verarbeitungseinheit und zusätzlich oder alternativ das Ladeprogramm zur oben beschriebenen Umwandlung der in einer im wesentlichen nicht komprimierbaren Form zur Verfügung gestellten ersten Daten in eine komprimierbare Form und zum Laden der ersten Daten in der komprimierbaren Form in die erste Speichereinrichtung ausgebildet.

Vorzugsweise ist die erste Verarbeitungseinheit und zusätzlich oder alternativ das Ladeprogramm zur oben beschriebenen Entschlüsselung der in verschlüsselter Form zur Verfügung gestellten ersten Daten und zum Laden der entschlüsselten ersten Daten in die erste Speichereinrichtung ausgebildet.

Weiter vorzugsweise ist die erste Verarbeitungseinheit und zusätzlich oder alternativ das Ladeprogramm zur Durchführung des oben beschriebenen Authentifizierungsschritts zur Überprüfung der Authentizität der zur Verfügung gestellten ersten Daten ausgebildet.

Die vorliegende Erfindung betrifft schließlich ebenfalls eine Datenverarbeitungseinrichtung, insbesondere eine Mikroprozessorkarte, mit einer ersten Verarbeitungseinheit und einer damit verbundenen ersten Speichereinrichtung, die ein Ladeprogramm und erste Daten enthält: erfindungsgemäß ist vorgesehen, dass der verfügbare Speicherplatz der ersten Speichereinrichtung vollständig überdeckt ist, wie dies oben im Zusammenhang mit dem erfindungsgemäßen Verfahren beschrieben wurde. Auch mit dieser Datenverarbeitungseinrichtung lassen sich die oben beschriebenen Ausgestaltungen und Vorteile des erfindungsgemäßen Verfahrens in gleichem Maße realisieren. Zur Vermeidung von Wiederholungen wird daher auch hier auf die obigen Ausführungen verwiesen.

Bevorzugte Varianten der erfindungsgemäßen Datenverarbeitungseinrichtung zeichnen sich dabei dadurch aus, dass der nicht durch das Ladeprogramm und die ersten Daten belegte Speicherplatz der ersten Speichereinrichtung in der oben beschriebenen Weise durch Fülldaten, insbesondere eine oder mehrere Zufallszahlen, belegt ist.

Bei der Datenverarbeitungseinrichtung kann es sich um eine beliebig gestaltete Einheit mit einer entsprechenden ersten Verarbeitungseinheit, einer entsprechenden ersten Schnittstelleneinrichtung und einer entsprechenden ersten Speichereinrichtung handeln. Sie kann beispielsweise als steckbares Modul für eine beliebige Datenverarbeitungseinrichtung, beispielsweise einen Computer oder dergleichen ausgebildet sein. Sie kann aber ebenso als so genannte Chipkarte ausgebildet sein.

Besonders vorteilhaft lassen sich die erfindungsgemäßen Datenverarbeitungseinrichtungen im Zusammenhang mit Frankiermaschinen einsetzten. Vorzugsweise ist die Datenverarbeitungseinrichtung daher als Komponente einer Frankiermaschine, insbesondere als Sicherheitsmodul der Frankiermaschine, ausgebildet.

Die vorliegende Erfindung betrifft weiterhin eine Ladeeinrichtung, insbesondere eine Mikroprozessorkarte, mit einer zweiten Verarbeitungseinheit und einer mit der zweiten Verarbeitungseinheit verbundenen zweiten Schnittstelleneinrichtung. Die zweite Verarbeitungseinheit ist zum Vorgeben von ersten Daten an eine über die zweite Schnittstelleneinrichtung mit der zweiten Verarbeitungseinheit verbundene Datenverarbeitungseinrichtung ausgebildet, die eine erste Speichereinrichtung aufweist. Die erste Speichereinrichtung ist dabei zum Speichern der ersten Daten vorgesehen und enthält ein Ladeprogramm. Erfindungsgemäß ist die zweite Verarbeitungseinheit zur Ermittlung des neben dem Ladeprogramm verfügbaren Speicherplatzes der ersten Speichereinrichtung ausgebildet. Weiterhin ist sie zur Erzielung einer vollständigen Speicherüberdeckung der ersten Speichereinrichtung zur Vorgabe von Fülldaten ausgebildet, mit denen der neben dem Ladeprogramm und den ersten Daten verfügbare Speicherplatz der ersten Speichereinrichtung vollständig ausgefüllt ist.

Mit dieser Ladeeinrichtung lassen sich die oben beschriebenen Ausgestaltungen und Vorteile des erfindungsgemäßen Verfahrens in gleichem Maße realisieren. Zur Vermeidung von Wiederholungen wird daher auch an dieser Stelle auf die obigen Ausführungen verwiesen.

Bei bevorzugten Varianten der erfindungsgemäßen Ladeeinrichtung ist vorgesehen, dass die zweite Verarbeitungseinheit zur Durchführung des oben beschriebenen Überprüfungsschrittes zur Überprüfung der Integrität der in der ersten Speichereinrichtung gespeicherten Daten ausgebildet ist.

Vorzugsweise ist die zweite Verarbeitungseinheit zum Vorgeben der ersten Daten in einer im wesentlichen nicht komprimierbaren Form ausgebildet, wie dies oben ausführlich beschrieben wurde. Weiter vorzugsweise ist die zweite Verarbeitungseinheit zum Vorgeben der ersten Daten in verschlüsselter Form ausgebildet, wie dies ebenfalls oben ausführlich beschrieben wurde.

Weitere bevorzugte Ausgestaltungen der Erfindung ergeben sich aus den Unteransprüchen bzw. der nachstehenden Beschreibung eines bevorzugten Ausführungsbeispiels, welche auf die beigefügten Zeichnungen Bezug nimmt. Es zeigen
- Figur 1: eine schematische Darstellung einer bevorzugten Ausführungsform einer Anordnung mit der erfindungsgemäßen Datenverarbeitungseinrichtung und der erfindungsgemäßen Ladeeinrichtung, die zur Durchführung des erfindungsgemäßen Verfahrens dienen;
- Figur 2: ein Ablaufdiagramm einer bevorzugten Ausführungsform des erfindungsgemäßen Verfahrens.

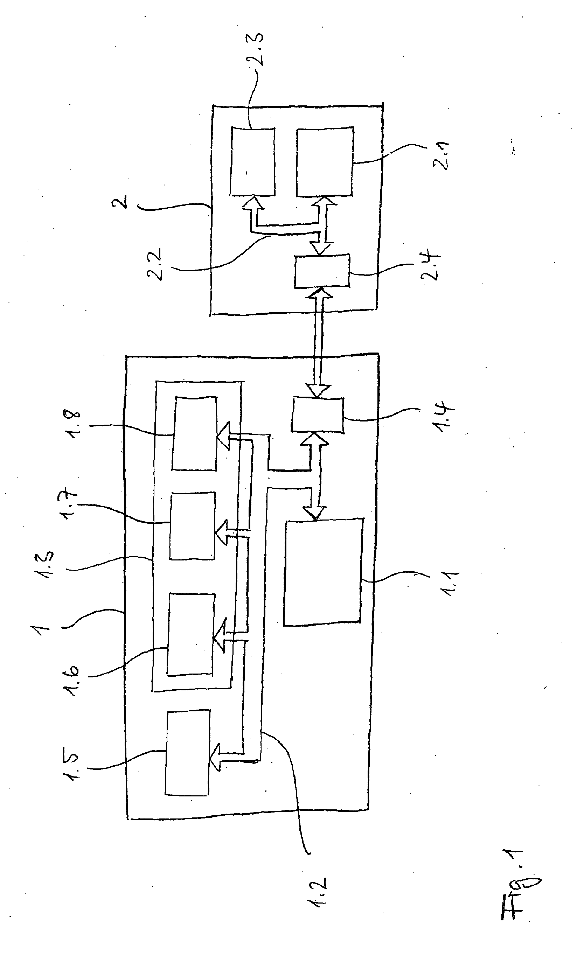

Figur 1 zeigt in Form eines Blockschaltbilds eine schematische Darstellung einer bevorzugten Ausführungsform einer Anordnung mit der erfindungsgemäßen Datenverarbeitungseinrichtung 1 und der erfindungsgemäßen Ladeeinrichtung 2, die zur Durchführung des erfindungsgemäßen Verfahrens dienen.

Die Datenverarbeitungseinrichtung 1 umfasst eine erste Verarbeitungseinheit 1.1, die über einen ersten Systembus 1.2 mit einer ersten Speichereinrichtung 1.3 verbunden ist. Die erste Verarbeitungseinheit 1.1 ist über den ersten Systembus 1.2 weiterhin mit einer ersten Schnittstelleneinrichtung 1.4 sowie einem flüchtigen Arbeitsspeicher 1.5 verbunden.

Die erste Speichereinrichtung 1.3 stellt den nicht flüchtigen Speicher der Datenverarbeitungseinrichtung 1 zur Verfügung. Sie besteht dabei aus drei nicht zusammenhängenden Speichermodulen 1.6, 1.7 und 1.8, wobei das erste Speichermodul 1.6 ein Ladeprogramm enthält. Das zweite Speichermodul 1.7 und das dritte Speichermodul 1.8 stehen für erste Daten zur Verfügung, die in die Datenverarbeitungseinrichtung 1 geladen werden sollen. Diese ersten Daten umfassen ein Anwendungsprogramm, welches der Datenverarbeitungseinrichtung 1 eine gewünschte autorisierte Funktion verleiht.

Die ersten Daten werden von der Ladeeinrichtung 2 zur Verfügung gestellt, die über die erste Schnittstelleneinrichtung 1.4 mit der Datenverarbeitungseinrichtung 1 verbunden ist. Die Ladeeinrichtung 2 umfasst eine zweite Verarbeitungseinheit 2.1, die über einen zweiten Systembus 2.2 mit einer zweiten Speichereinrichtung 2.3 und einer zweiten Schnittstelleneinrichtung 2.4 verbunden ist. In der zweiten Speichereinrichtung 2.3 sind unter anderem die an die Datenverarbeitungseinrichtung 1 zu übermittelnden ersten Daten abgelegt.

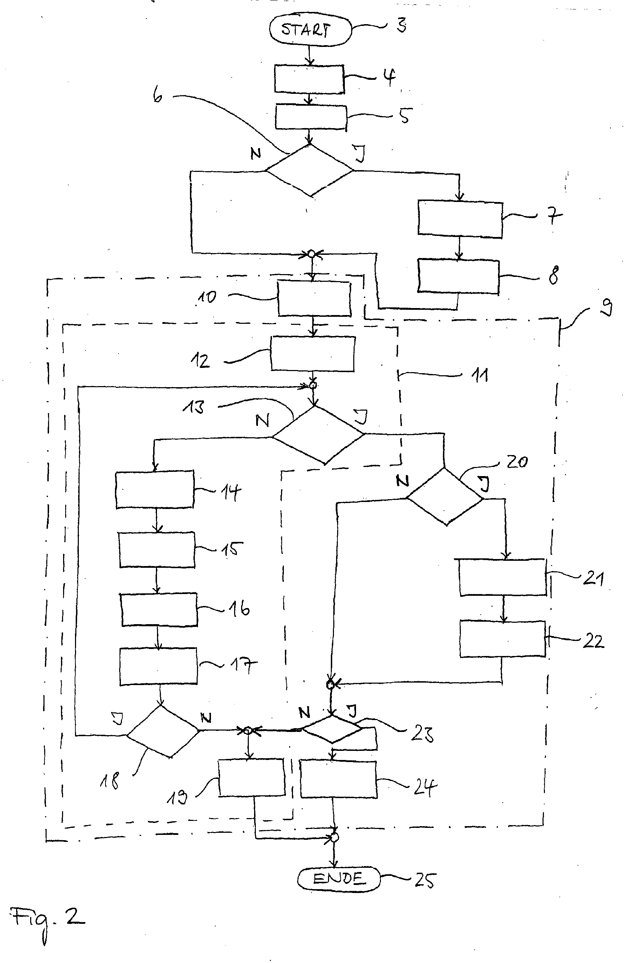

Bezug nehmend auf die Figuren 1 und 2 wird nunmehr ein bevorzugtes Ausführungsbeispiel des erfindungsgemäßen Verfahrens beschrieben, das mit der Anordnung aus der Datenverarbeitungseinrichtung 1 und der Ladeeinrichtung 2 durchgeführt wird.

Zu einem bestimmten Zeitpunkt nach dem Herstellen der Verbindung zwischen der Datenverarbeitungseinrichtung 1 und der Ladeeinrichtung 2 über die Schnittstelleneinrichtungen 1.4 und 2.4 wird das erfindungsgemäße Verfahren in einem Schritt 3 gestartet. Dies kann durch Betätigen einer entsprechenden - in Figur 1 nicht dargestellten-Eingabeeinrichtung der Datenverarbeitungseinrichtung 1 oder der Ladeeinrichtung 2 erfolgen. Ebenso kann dies automatisch nach Herstellung der Verbindung zwischen der Datenverarbeitungseinrichtung 1 und der Ladeeinrichtung 2 erfolgen.

In einem Schritt 4 überprüft die zweite Verarbeitungseinheit 2.1 unter Zugriff auf ein entsprechendes, in der zweiten Speichereinrichtung 2.3 abgelegtes Programm und die Datenverarbeitungseinrichtung 1, wie viel Speicherplatz neben dem Ladeprogramm in der ersten Speichereinrichtung 1.3 zur Verfügung steht.

In einem Schritt 5 erzeugt die zweite Verarbeitungseinheit 2.1 ein erstes Datenpaket, welches die ersten Daten und erste Fülldaten umfasst. Dabei bestehen die ersten Fülldaten aus einer oder mehreren Zufallszahlen, deren Anzahl und Datenmenge so gewählt sind, dass die ersten Daten und die ersten Fülldaten exakt den in der ersten Speichereinrichtung 1.3 neben dem Ladeprogramm zur Verfügung stehenden Speicher ausfüllen. Die ersten Fülldaten werden von der zweiten Verarbeitungseinheit 2.1 unter Zugriff auf einen entsprechenden in der zweiten Speichereinrichtung 2.3 abgelegten Algorithmus erzeugt.

In einem Schritt 6 wird nunmehr in der Ladeeinrichtung 2 überprüft, ob die ersten Daten in verschlüsselter Form an die Datenverarbeitungseinrichtung 1 übersandt werden sollen. Diese Vorgabe kann wiederum durch eine entsprechende Eingabe durch Betätigen einer entsprechenden - in Figur 1 nicht dargestellten - Eingabeeinrichtung der Datenverarbeitungseinrichtung 1 oder der Ladeeinrichtung 2 erfolgen. Ebenso kann diese Vorgabe automatisch nach Herstellung der Verbindung zwischen der Datenverarbeitungseinrichtung 1 und der Ladeeinrichtung 2 gemacht werden, indem der Zustand eines entsprechenden Speichers abgefragt wird.

Ergibt die Überprüfung in Schritt 6, dass die ersteri Daten in verschlüsselter Form und damit in im wesentlichen nicht komprimierbarer Form übertragen werden sollen, erzeugt die zweite Verarbeitungseinheit 2.1 zunächst in Schritt 7 unter Zugriff auf einen in der zweiten Speichereinrichtung 2.3 abgelegten entsprechenden Schlüsselgenerierungsalgorithmus einen geheimen Schlüssel.

Anschließend wird das erste Datenpaket aus den ersten Daten und den ersten Fülldaten in Schritt 8 unter Verwendung des geheimen Schlüssels verschlüsselt. Hierzu greift die zweite Verarbeitungseinheit 2.1 auf einen entsprechenden in der zweiten Speichereinrichtung 2.3 abgelegten Verschlüsselungsalgorithmus zu.

In Schritt 8 wird bei bestimmten Varianten des erfindungsgemäßen Verfahrens, bei denen im Zuge der Verschlüsselung eine Kompression der Daten stattfindet, weiterhin ein zweites Datenpaket generiert, welches das verschlüsselte erste Datenpaket und zweite Fülldaten umfasst. Dabei bestehen die zweiten Fülldaten wiederum aus einer oder mehreren Zufallszahlen, deren Anzahl und Datenmenge so gewählt sind, dass das verschlüsselte erste Datenpaket und die zweiten Fülldaten exakt den in der ersten Speichereinrichtung 1.3 neben dem Ladeprogramm zur Verfügung stehenden Speicher ausfüllen. Auch hier werden die zweiten Fülldaten von der zweiten Verarbeitungseinheit 2.1 unter Zugriff auf einen entsprechenden in der zweiten Speichereinrichtung 2.3 abgelegten Algorithmus erzeugt.

Es versteht sich jedoch, dass bei anderen Varianten des erfindungsgemäßen Verfahrens auch eine Verschlüsselung vorgesehen sein kann, bei der keine Kompression der Daten stattfindet. Die verschlüsselte Datensequenz hat dann dieselbe Länge wie die unverschlüsselte Datensequenz, wie dies beispielsweise bei der so genannten blockweisen Verschlüsselung der Fall ist. In diesem Fall muss kein zweites Datenpaket erzeugt werden, da auch das verschlüsselte erste Datenpaket so groß ist, dass der in der ersten Speichereinrichtung 1.3 neben dem Ladeprogramm zur Verfügung stehende Speicher mit dem verschlüsselten ersten Datenpaket ausgefüllt wird.

In einem Ladeschritt 9 erfolgt dann das Laden der ersten Daten in die erste Speichereinrichtung derart, dass das Ladeprogramm, die ersten Daten und die ersten Fülldaten den gesamten zur Verfügung stehenden Speicherplatz der ersten Speichereinrichtung 1.3 ausfüllen, sodass eine vollständige Speicherüberdeckung der ersten Speichereinrichtung 1.3 erzielt wird.

Wurde die Verschlüsselung mit Kompression gewählt, werden in einem ersten Teilschritt 10 des Ladeschritts 9 mit dem zweiten Datenpaket die ersten Daten in verschlüsselter und damit im wesentlichen nicht komprimierbarer Form von der Ladeeinrichtung 2 an die Datenverarbeitungseinrichtung 1 übermittelt und dieser damit zur Verfügung gestellt. Bei Varianten des erfindungsgemäßen Verfahrens, bei denen eine Verschlüsselung ohne Datenkompression vorgesehen ist, wird in dem Schritt 10 das verschlüsselte erste Datenpaket mit den verschlüsselten ersten Daten und den verschlüsselten ersten Fülldaten von der Ladeeinrichtung 2 an die Datenverarbeitungseinrichtung 1 übermittelt und dieser damit zur Verfügung gestellt. Bei Varianten des erfindungsgemäßen Verfahrens, bei denen keine Verschlüsselung gewählt wurde, wird in dem Schritt 10 das erste Datenpaket mit den ersten Daten und den ersten Fülldaten im Klartext von der Ladeeinrichtung 2 an die Datenverarbeitungseinrichtung 1 übermittelt und dieser damit zur Verfügung gestellt.

In allen drei Fällen schreibt die erste Verarbeitungseinheit 1.1 das Datenpaket im Schritt 10 in die nicht von dem Ladeprogramm belegten Speicherbereiche der ersten Speichereinrichtung 1.3 ein, sodass auf Grund der zuvor gewählten Datenmenge des jeweiligen Datenpakets der gesamte Speicherplatz der ersten Speichereinrichtung 1.3 ausgefüllt wird. Mit anderen Worten wird eine vollständige Speicherüberdeckung der ersten Speichereinrichtung 1.3 erzielt.

Hierbei werden eventuell in der ersten Speichereinrichtung 1.3 vorhandene, nicht autorisierte Programme oder Daten überschrieben, sodass in der ersten Speichereinrichtung 1.3 ausschließlich autorisierte Daten vorliegen. Bei Varianten mit Übertragung der ersten Daten in verschlüsselter Form wird zudem der oben bereits ausführlich beschriebene Kompressionsangriff verhindert.

Es versteht sich hierbei im Übrigen, dass bei anderen Varianten des erfindungsgemäßen Verfahrens die jeweiligen Fülldaten auch von der ersten Verarbeitungseinheit 1.1 unter Zugriff auf einen entsprechenden Algorithmus, der beispielsweise im Code des Ladeprogramms abgelegt sein kann, generiert werden können.

In einem Überprüfungsschritt 11 wird nunmehr der verfügbare Speicherplatz der ersten Speichereinrichtung in eine Reihe von Speichersegmenten unterteilt, über deren Inhalt jeweils eine Prüfsumme gebildet wird , die dann mit einer entsprechenden Vergleichsprüfsumme verglichen wird.

Dabei wird in Schritt 12 der Speicherbereich der Speichermodule 1.6, 1.7 und 1.8 jeweils in wenigstens zwei Speichersegmente unterteilt. Die Unterteilung wird dabei nach dem Zufallsprinzip, also nach einem geeigneten Zufallsalgorithmus bzw. Pseudozufallsalgorithmus, vorgenommen. Im vorliegenden Beispiel geschieht dies durch die zweite Verarbeitungseinheit 2.1, die hierzu auf einen entsprechenden Algorithmus in der zweiten Speichereinrichtung 2.3 zugreift. Es versteht sich jedoch, dass diese Unterteilung bei anderen Varianten der Erfindung auch in der Datenverarbeitungseinrichtung vorgenommen werden kann.

Der Vergleich, ob die Prüfsumme für das jeweilige Speichersegment mit der zugehörigen Vergleichsprüfsumme übereinstimmt, erfolgt im vorliegenden Beispiel in der Ladeeinrichtung 2. Die segmentweise Überprüfung beginnt in Schritt 13 in der Ladeeinrichtung 2 mit der Abfrage, ob bereits sämtliche Speichersegmente gemäß der Unterteilung überprüft wurden. Ist dies nicht der Fall, wird in Schritt 14 zunächst das nächstfolgende Speichersegment gemäß der Unterteilung ausgewählt.

Anschließend wird in Schritt 15 in der Ladeeinrichtung 2 zunächst die Vergleichsprüfsumme für das betreffende Segment aus den in der Ladeeinrichtung 2 bekannten Soll-Inhalten (erste Daten, Fülldaten, gegebenenfalls Ladeprogramm) berechnet. Bei Varianten, bei denen das Ladeprogramm das erste Speichermodul 1.6 vollständig überdeckt, kann sich eine entsprechende Überprüfung des ersten Speichermoduls erübrigen, sodass die Ladeeinrichtung keine Kenntnis des Ladeprogramms haben muss.

In Schritt 16 fordert die Ladeeinrichtung 2 dann von der Datenverarbeitungseinrichtung 1 die Prüfsumme für das jeweilige Speichersegment an. In Schritt 17 generiert die Datenverarbeitungseinrichtung gemäß der durch die Ladeeinrichtung 2 vorgegebenen Unterteilung die Prüfsumme für das betreffende Speichersegment und übermittelt diese Prüfsumme an die Ladeeinrichtung 2. Im vorliegenden Fall wird die Vergleichsprüfsumme ebenso wie die Prüfsumme durch den Secure Hash Algorithm SHA-1 als kryptographischen Prüfsummenalgorithmus generiert. Die entsprechende Verarbeitungseinheit 1.1 bzw. 2.1 greift dabei auf den in der zugehörigen Speichereinrichtung 1.3 bzw. 2.3 abgelegten Algorithmus zu.

In Schritt 18 erfolgt dann wiederum in der Ladeeinrichtung 2 der Vergleich zwischen der Prüfsumme und der Vergleichsprüfsumme für das jeweilige Speichersegment. Stimmen diese überein, wird bei Schritt 13 fortgefahren. Stimmen sie nicht überein, wird in Schritt 19 ein entsprechendes optisches und akustisches Warnsignal an der Ladeeinrichtung 2 ausgegeben. Weiterhin wird die Datenverarbeitungseinrichtung 1 für den weiteren Betrieb gesperrt und der Programmablauf beendet.

Es versteht sich hierbei, dass für die Generierung der Vergleichsprüfsumme und die Anforderung, Generierung und Übertragung der Prüfsumme bei anderen Varianten des erfindungsgemäßen Verfahrens auch eine andere zeitliche Abfolge vorgesehen sein kann. Insbesondere können bestimmte Schritte auch parallel ablaufen.

Ergibt die Überprüfung in der Schritt 13, dass alle Speichersegmente mit positivem Ergebnis überprüft wurden, erfolgt in Schritt 20 erneut die Abfrage, ob die ersten Daten in verschlüsselter Form übertragen wurden. Ist dies der Fall, wird in Schritt 21 ein Entschlüsselungsschlüssel von der Ladeeinrichtung 2 an die Datenverarbeitungseinrichtung 1 übertragen, mit dem das verschlüsselte erste Datenpaket entschlüsselt werden kann.

Im vorliegenden Beispiel erfolgt die Verschlüsselung des ersten Datenpakets mit einem symmetrischen Verschlüsselungsalgorithmus (z. B. DES), sodass der in Schritt 7 generierte geheime Schlüssel als Entschlüsselungsschlüssel von der Ladeeinrichtung 2 an die Datenverarbeitungseinrichtung 1 übertragen wird. Die erste Verarbeitungseinheit 1.1 legt den Entschlüsselungsschlüssel in dem Arbeitsspeicher 1.5 ab.

Anschließend entschlüsselt die erste Verarbeitungseinheit 1.1 einem zweiten Teilschritt 22 des Ladeschritts 9 das in der Speichereinrichtung abgelegte erste Datenpaket unter Zugriff auf den Entschlüsselungsschlüssel und den zugehörigen Algorithmus, der im Ladeprogramm integriert ist. Das so im Klartext erhaltene erste Datenpaket wird dann in den Speicherbereich der ersten Speichereinrichtung 1.3 eingeschrieben, der nicht durch das Ladeprogramm belegt ist. Durch die Abstimmung der ersten Fülldaten auf den vorhandenen Speicherplatz wird auch hier eine vollständige Speicherüberdeckung der ersten Speichereinrichtung 1.3 mit dem Ladeprogramm, den ersten Daten und den ersten Fülldaten erzielt.

Im nachfolgenden Authentifizierungsschritt 23 werden die ersten Daten auf ihre Authentizität hin überprüft. Hierzu enthalten die ersten Daten eine digitale Signatur, die über einen Teil der ersten Daten erstellt wurde. Die erste Verarbeitungseinheit 1.3 verifiziert diese digitale Signatur, um die Authentizität der ersten Daten zu überprüfen.

Ist auch die Authentizitätsprüfung erfolgreich abgeschlossen worden, wird in Schritt 24 der erfolgreiche Abschluss des Ladeschritts 9 durch ein entsprechendes optisches und akustisches Signal der Ladeeinrichtung 2 signalisiert. In Schritt 25 wird der Ablauf der Routine dann beendet. Liefert die Authentizitätsprüfung ein negatives Ergebnis, so wird wie oben beschrieben in Schritt 19 verfahren.

Es versteht sich, dass die Authentizitätsprüfung bei anderen Varianten des erfindungsgemäßen Verfahrens auch fehlen kann. Wird jedoch zur Erhöhung der Sicherheit angewandt, zu werden hierbei vorzugsweise digitale Signaturen auf der Basis asymmetrischer Verschlüsselungsverfahren angewandt, um die Notwendigkeit einer umfangreichen Verbreitung eines geheimen Schlüssels zu umgehen. Es versteht sich jedoch, des gegebenenfalls auch der in Schritt 7 generierte geheime Schlüssel zur Erstellung der Signatur verwendet werden kann. Es versteht sich weiterhin, dass die Überprüfung der Authentizität der ersten Daten auch auf beliebige geeignete andere Weise, beispielsweise durch den Einsatz von Message Authentication Codes (MAC) erfolgen kann.

Im vorliegenden Beispiel ist die Datenverarbeitungseinrichtung 1 das Sicherheitsmodul einer Frankiermaschine, während die Ladeeinrichtung eine Entsprechende mit der Datenverarbeitungseinrichtung 1 verbundener Computer ist.

Es versteht sich jedoch, dass die Datenverarbeitungseinrichtung bei anderen Varianten der Erfindung auch für beliebige andere Anwendungen ausgelegt und gestaltet sein kann. Insbesondere können sowohl die Datenverarbeitungseinrichtung als auch die Ladeeinrichtung in Form von Chipkarten gestaltet sein, die in eine entsprechende' Schreib-Lese-Einrichtung eingesteckt sind, um das Laden der ersten Daten zu vollziehen.

## Patentansprüche

1. Verfahren zum Laden von Daten in eine mit einer ersten Verarbeitungseinheit (1.1) verbundene erste Speichereinrichtung (1.3) einer Datenverarbeitungseinrichtung (1), bei dem die erste Verarbeitungseinheit (1.1) unter Zugriff auf ein in der ersten Speichereinrichtung (1.3) gespeichertes Ladeprogramm in einem Ladeschritt erste Daten in die erste Speichereinrichtung (1.3) lädt, **dadurch gekennzeichnet, dass** zur Erzielung einer vollständigen Speicherüberdeckung in dem Ladeschritt der verfügbare Speicherplatz der ersten Speichereinrichtung (1.3) vollständig belegt wird.

2. Verfahren nach Anspruch 1, **dadurch gekennzeichnet, dass** in dem Ladeschritt nicht durch das Ladeprogramm oder die ersten Daten belegte Speicherbereiche der ersten Speichereinrichtung (1.3) durch Fülldaten, insbesondere Zufallszahlen, aufgefüllt werden.

3. Verfahren nach Anspruch 2, **dadurch gekennzeichnet, dass** die Fülldaten durch eine mit der ersten Verarbeitungseinheit (1.1) verbundene Ladeeinrichtung (2) vorgegeben werden.

4. Verfahren nach einem der vorhergehenden Ansprüche, **dadurch gekennzeichnet, dass** der verfügbare Speicherplatz der ersten Speichereinrichtung (1.3) in wenigstens einem Überprüfungsschritt (11) in wenigstens zwei, insbesondere teilweise überlappende, Speichersegmente unterteilt wird und über den Inhalt eines jeden der Speichersegmente eine Prüfsumme gebildet wird, die mit einer zugeordneten Vergleichsprüfsumme verglichen wird.

5. Verfahren nach Anspruch 4, **dadurch gekennzeichnet, dass** die Unterteilung in Speichersegmente für jeden Überprüfungsschritt (11) nach einem variablen Algorithmus, insbesondere nach dem Zufallsprinzip, bestimmt wird.

6. Verfahren nach einem der Ansprüche 4 oder 5, **dadurch gekennzeichnet, dass** bei der Bildung der Prüfsumme kryptographische Mittel verwendet werden.

7. Verfahren nach einem der Ansprüche 4 bis 6, **dadurch gekennzeichnet, dass** die Vergleichsprüfsumme in einer mit der ersten Verarbeitungseinheit (1.1) verbundenen Ladeeinrichtung (2) gebildet wird und/oder dass der Vergleich der Prüfsumme mit der zugeordneten Vergleichsprüfsumme in einer mit der ersten Verarbeitungseinheit (1.1) verbundenen Ladeeinrichtung (2) erfolgt.

8. Verfahren nach einem der vorhergehenden Ansprüche, **dadurch gekennzeichnet, dass** die ersten Daten in einem ersten Teilschritt (10) des Ladeschrittes (9) in einer im wesentlichen nicht komprimierbaren Form zur Verfügung gestellt werden, insbesondere in die erste Speichereinrichtung (1.3) geladen werden, und in einem nachfolgenden zweiten Teilschritt (22) des Ladeschrittes (9) in eine komprimierbare Form umgewandelt sowie in die erste Speichereinrichtung (1.3) geladen werden.

9. Verfahren nach einem der vorhergehenden Ansprüche, **dadurch gekennzeichnet, dass** die ersten Daten in einem ersten Teilschritt (10) des Ladeschrittes (9) in verschlüsselter Form zur Verfügung gestellt werden, insbesondere in die erste Speichereinrichtung geladen werden, und in einem nachfolgenden zweiten Teilschritt (22) des Ladeschrittes (9) entschlüsselt sowie in die erste Speichereinrichtung geladen werden.

10. Verfahren nach Anspruch 9, **dadurch gekennzeichnet, dass** vor dem zweiten Teilschritt (22), insbesondere durch eine mit der ersten Verarbeitungseinheit (1.1) verbundene Ladeeinrichtung (2), ein Entschlüsselungsschlüssel zur Verwendung bei der Entschlüsselung der ersten Daten an die erste Verarbeitungseinheit (1.1) übermittelt wird.

11. Verfahren nach einem der vorhergehenden Ansprüche, **dadurch gekennzeichnet, dass** die ersten Daten in einem Authentifizierungsschritt (23) unter Verwendung der ersten Verarbeitungseinheit (1.1) auf ihre Authentizität überprüft werden.

12. Verfahren nach Anspruch 11, **dadurch gekennzeichnet, dass** zur Sicherstellung der Authentizität der ersten Daten kryptographische Mittel, insbesondere wenigstens eine digitale Signatur über wenigstens einen Teil der ersten Daten, eingesetzt werden.

13. Verfahren nach einem der vorhergehenden Ansprüche, **dadurch gekennzeichnet, dass** die ersten Daten ein ausführbares Programm umfassen.

14. Datenverarbeitungseinrichtung, insbesondere Mikroprozessorkarte, mit einer ersten Verarbeitungseinheit (1.1), einer mit der ersten Verarbeitungseinheit (1.1) verbundenen ersten Speichereinrichtung (1.3) und einer mit der ersten Verarbeitungseinheit (1.1) verbundenen ersten Schnittstelleneinrichtung (1.4), wobei die erste Verarbeitungseinheit (1.1) zum Laden von über die erste Schnittstelleneinrichtung (1.4) zur Verfügung gestellten ersten Daten in die erste Speichereinrichtung (1.3) unter Zugriff auf ein in der ersten Speichereinrichtung (1.3) gespeichertes Ladeprogramm ausgebildet ist, **dadurch gekennzeichnet, dass** zur Erzielung einer vollständigen Speicherüberdeckung der ersten Speichereinrichtung (1.3) die erste Verarbeitungseinheit (1.1) und/oder das Ladeprogramm zum vollständigen Belegen des verfügbaren Speicherplatzes der ersten Speichereinrichtung (1.3) während oder nach dem Laden der ersten Daten in die erste Speichereinrichtung (1.3) ausgebildet sind.

15. Datenverarbeitungseinrichtung nach Anspruch 14, **dadurch gekennzeichnet, dass** die erste Verarbeitungseinheit (1.1) und/oder das Ladeprogramm zum Auffüllen von nicht durch das Ladeprogramm oder die ersten Daten belegten Speicherbereichen der ersten Speichereinrichtung (1.3) durch Fülldaten, insbesondere Zufallszahlen, ausgebildet ist.

16. Datenverarbeitungseinrichtung nach Anspruch 15, **dadurch gekennzeichnet, dass** die erste Verarbeitungseinheit (1.1) und/oder das Ladeprogramm zur Verwendung von über die erste Schnittstelleneinrichtung (1.4) zur Verfügung gestellten Fülldaten ausgebildet ist.

17. Datenverarbeitungseinrichtung nach einem der Ansprüche 14 bis 16, **dadurch gekennzeichnet, dass** die erste Verarbeitungseinheit (1.1) und/oder das Ladeprogramm zur Durchführung eines Überprüfungsschrittes (11) zur Überprüfung der Integrität der in der ersten Speichereinrichtung (1.3) gespeicherten Daten ausgebildet ist.

18. Datenverarbeitungseinrichtung nach einem der Ansprüche 14 bis 17, **dadurch gekennzeichnet, dass** die erste Verarbeitungseinheit (1.1) und/oder das Ladeprogramm zur Umwandlung der in einer im wesentlichen nicht komprimierbaren Form zur Verfügung gestellten ersten Daten in eine komprimierbare Form und zum Laden der ersten Daten in der komprimierbaren Form in die erste Speichereinrichtung (1.3) ausgebildet ist.

19. Datenverarbeitungseinrichtung nach einem der Ansprüche 14 bis 18, **dadurch gekennzeichnet, dass** die erste Verarbeitungseinheit (1.1) und/oder das Ladeprogramm zur Entschlüsselung der in verschlüsselter Form zur Verfügung gestellten ersten Daten und zum Laden der entschlüsselten ersten Daten in die erste Speichereinrichtung (1.3) ausgebildet ist.

20. Datenverarbeitungseinrichtung nach einem der Ansprüche 14 bis 19, **dadurch gekennzeichnet, dass** die erste Verarbeitungseinheit (1.1) und/oder das Ladeprogramm zur Durchführung eines Authentifizierungsschritts (23) zur Überprüfung der Authentizität der zur Verfügung gestellten ersten. Daten ausgebildet ist.

21. Datenverarbeitungseinrichtung, insbesondere Mikroprozessorkarte, mit einer ersten Verarbeitungseinheit (1.1) und einer damit verbundenen ersten Speichereinrichtung (1.3), die ein Ladeprogramm und erste Daten enthält, **dadurch gekennzeichnet, dass** der verfügbare Speicherplatz der ersten Speichereinrichtung (1.3) vollständig überdeckt ist.

22. Datenverarbeitungseinrichtung nach Anspruch 21, **dadurch gekennzeichnet, dass** der nicht durch das Ladeprogramm und die ersten Daten belegte Speicherplatz der ersten Speichereinrichtung (1.3) durch Fülldaten, insbesondere eine oder mehrere Zufallszahlen, belegt ist.

23. Datenverarbeitungseinrichtung nach einem der Ansprüche 14 bis 22, **dadurch gekennzeichnet, dass** sie als Komponente einer Frankiermaschine, insbesondere als Sicherheitsmodul der Frankiermaschine, ausgebildet ist.

24. Ladeeinrichtung, insbesondere Mikroprozessorkarte, mit einer zweiten Verarbeitungseinheit (2.1) und einer mit der zweiten Verarbeitungseinheit (2.1) verbundenen zweiten Schnittstelleneinrichtung (2.4),
wobei die zweite Verarbeitungseinheit (2.1) zum Vorgeben von ersten Daten an eine über die zweite Schnittstelleneinrichtung (2.4) mit der zweiten Verarbeitungseinheit (2.1) verbundene Datenverarbeitungseinrichtung (1) mit einer ersten Speichereinrichtung (1,3) ausgebildet ist, wobei die erste Speichereinrichtung (1.3) zum Speichern der ersten Daten vorgesehen ist und ein Ladeprogramm enthält, **dadurch gekennzeichnet, dass** die zweite Verarbeitungseinheit (2.1) zur Ermittlung des neben dem Ladeprogramm verfügbaren Speicherplatzes der ersten Speichereinrichtung (1.3) ausgebildet ist und zur Erzielung einer vollständigen Speicherüberdeckung der ersten Speichereinrichtung (1.3) zur Vorgabe von Fülldaten ausgebildet ist, mit denen der neben dem Ladeprogramm und den ersten Daten verfügbare Speicherplatz der ersten Speichereinrichtung (1.3) vollständig ausgefüllt ist.

25. Ladeeinrichtung nach Anspruch 24, **dadurch gekennzeichnet, dass** die zweite Verarbeitungseinheit (2.1) zur Durchführung eines Überprüfungsschrittes (11) zur Überprüfung der Integrität der in der ersten Speichereinrichtung (1.3) gespeicherten Daten ausgebildet ist.

26. Ladeeinrichtung nach Anspruch 24 oder 25, **dadurch gekennzeichnet, dass** die zweite Verarbeitungseinheit (2.1) zum Vorgeben der ersten Daten in einer im wesentlichen nicht komprimierbaren Form ausgebildet ist.

27. Ladeeinrichtung nach einem der Ansprüche 24 bis 26, **dadurch gekennzeichnet, dass** die zweite Verarbeitungseinheit (2.1) zum Vorgeben der ersten Daten in verschlüsselter Form ausgebildet ist.
